# EUROPÄISCHE PATENTSCHRIFT

(11) **EP 1 051 941 B1**
(45) Veröffentlichungstag und Bekanntmachung des Hinweises auf die Patenterteilung: **18.08.2004**
(21) Anmeldenummer: 00810284.0
(22) Anmeldetag: 03.04.2000
(51) Int. Cl.: A47J 31/44, A47B 77/08

(54) **Kaffeemaschinenanordnung**
Arrangement for a coffee-maker
Arrangement d'une cafetière électrique

(30) Priorität: 12.05.1999 CH 91099
(43) Veröffentlichungstag der Anmeldung: 15.11.2000
(73) Patentinhaber: Fianara International B.V., 1079 LH Amsterdam (NL)
(72) Erfinder: Schmed, Arthur, CH-8635 Oberdürnten (CH)
(74) Vertreter: Rottmann, Maximilian R.

(56) Entgegenhaltungen:
- EP-A- 0 783 859
- DE-A- 3 635 669
- US-A- 5 836 169

## Beschreibung

Die Erfindung betrifft ein Küchenmöbel mit einer Kaffeemachinenanordnung nach dem Oberbegriff des Anspruchs 1. Solches Küchenmöbel ist aus EP-A-783 859 bekannt.

Kaffeemaschinen für den Haushalt werden heutzutage vorwiegend als Tischmodelle hergestellt. Ein Nachteil von solchen Tischgeräten ist insbesondere darin zu sehen, dass sie eine Abstellfläche permanent belegen.

Um diesem Problem zu begegnen, sind Kaffeemaschinen bekannt, welche als Einbaugeräte zur Aufnahme in der Norm-Aussparung eines Küchenmöbels ausgebildet sind. Die Frontabdeckung solcher Kaffeemaschinen erstreckt sich im Normalfall über die gesamte Front des Küchenmöbels, wodurch die gesamte Aussparung des Küchenmöbels von der Kaffeemaschine beansprucht wird. Ein weiterer Nachteil derartiger Kaffeemaschinen ist darin zu sehen, dass sie speziell für den Einbau in ein Küchenmöbel ausgebildet sein müssen, was deren Herstellung verteuert.

Es ist daher die Aufgabe der Erfindung, ein gemäss dem Oberbegriff des Anspruchs 1 ausgebildetes Küchenmöbel derart auszugestalten, dass die Kaffeemaschine mit geringem baulichen Mehraufwand an die Gegebenheiten zur Aufnahme in einem Küchenmöbel angepasst und der zur Verfügung stehende Raum optimal genutzt werden kann.

Diese Aufgabe wird durch die im Kennzeichen des Anspruchs 1 angeführten Merkmale gelöst.

Bevorzugte Weiterbildungen des Erfindungsgegenstands sind in den abhängigen Ansprüchen 2 bis 13 umschrieben.

Bei einer bevorzugten Weiterbildung der Kaffeemaschinenanordnung ist vorgesehen, den Aufnahmebereich zur Aufnahme von zumindest einem weiteren Getränkebereiter auszubilden. Beispielsweise kommt dafür ein Sodawasser-Bereiter in Frage, was sich insbesondere dann anbietet, wenn die Kaffeemaschine an einer Frischwasserleitung angeschlossen wird, da in diesem Fall der Frischwasseranschluss für beide Geräte genutzt werden könnte.
Bei alternativen Ausbildungen der Kaffeemaschinenanordnung ist vorgesehen, den Aufnahmebereich zumindest teilweise zur Aufnahme von Getränkebehältern, insbesondere zur Aufnahme von Tassen, Gläsern oder sonstigen Trinkgefässen auszubilden und zumindest teilweise zu heizen oder kühlen.

Eine Heizung ist insbesondere zum Vorwärmen von Espressotassen vorteilhaft, da Espressotassen einen im Verhältnis zur aufzunehmenden Getränkemenge hohen Keramikanteil aufweisen, durch welchen das Espresso-Getränk in unerwünschter Weise stark abgekühlt wird.

Eine Kühlung bietet sich insbesondere dann an, wenn im Aufnahmebereich Kaltgetränke aufbewahrt werden sollen.

Anhand von Zeichnungen wird nachfolgend ein Ausführungsbeispiel der Erfindung näher erläutert.

In diesen Zeichnungen zeigt:
- Fig. 1: eine Frontansicht der in einem Küchenmöbel aufgenommenen Kaffeemaschinenanordnung;
- Fig. 2: eine perspektivische Seitenansicht der Kaffeemaschinenanordnung, und
- Fig. 3: eine perspektivische Ansicht von der anderen Seite der Kaffeemaschinenanordnung.

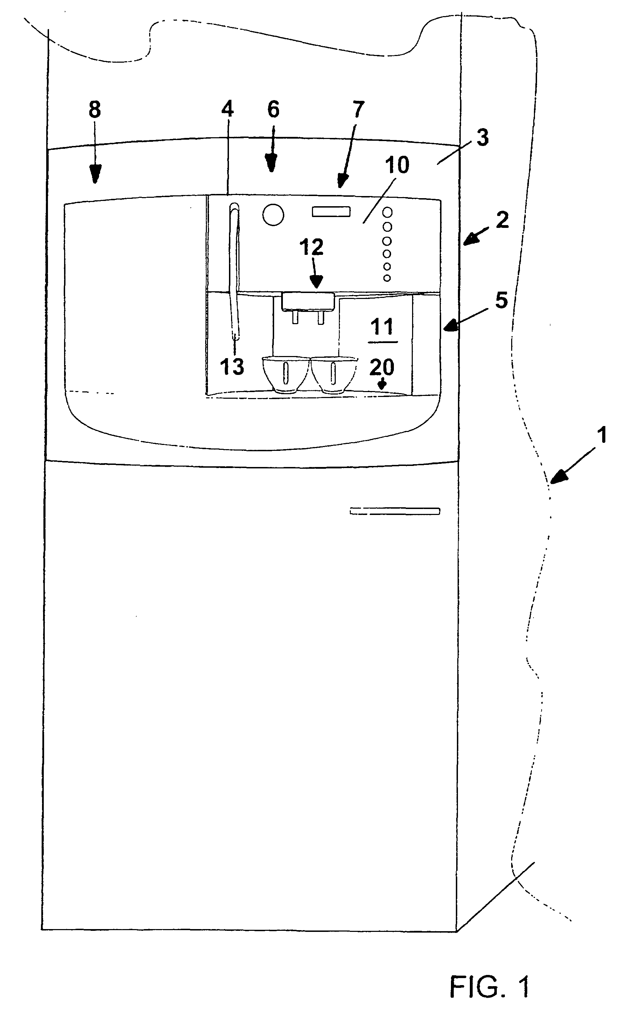

Anhand der Fig. 1 soll der grundsätzliche Aufbau der erfindungsgemässen Kaffeemaschinenanordnung näher erläutert werden.

Bei einem als Teil eines Schranks 1 ausgebildeten Küchenmöbel 2 wird die Vorderseite durch eine Frontplatte 3 gebildet, in welche eine Ausnehmung 4 eingelassen ist. Die Kaffeemaschinenanordnung 6 ist derart im Küchenmöbel 2 aufgenommen, dass deren Frontbereich 10 bündig mit der Frontplatte 3 abschliesst und als integraler Bestandteil der Front des Küchenmöbels 2 ausgebildet ist. Die Kaffeemaschinenanordnung 6 besteht aus einer Kaffeemaschine 7 sowie einem Aufnahmebereich 8, welcher aus dieser Darstellung nicht näher ersichtlich ist. Der Frontbereich 10 der Kaffeemaschine 7 weist eine Vielzahl von Bedien- und Ausgabeelementen auf, wobei eine Aussparung 11 vorgesehen ist, in welche eine Kaffeeausgabeteil 12 mündet.

Ein Grundgedanke bei diesem Ausführungsbeispiel ist demnach darin zu sehen, dass der Frontbereich 10 einer an und für sich bekannten Haushalt-Espresso-Kaffeemaschine 7 als integrierender Bestandteil der Front des Küchenmöbels 2 gestaltet ist, wobei sich der Frontbereich 10 der Kaffeemaschine 7 nur über einen Teil der Front des Küchenmöbels 2 erstreckt, so dass der danebst zur Verfügung stehende Raum zur Ausbildung des Aufnahmebereichs 8 genutzt werden kann.

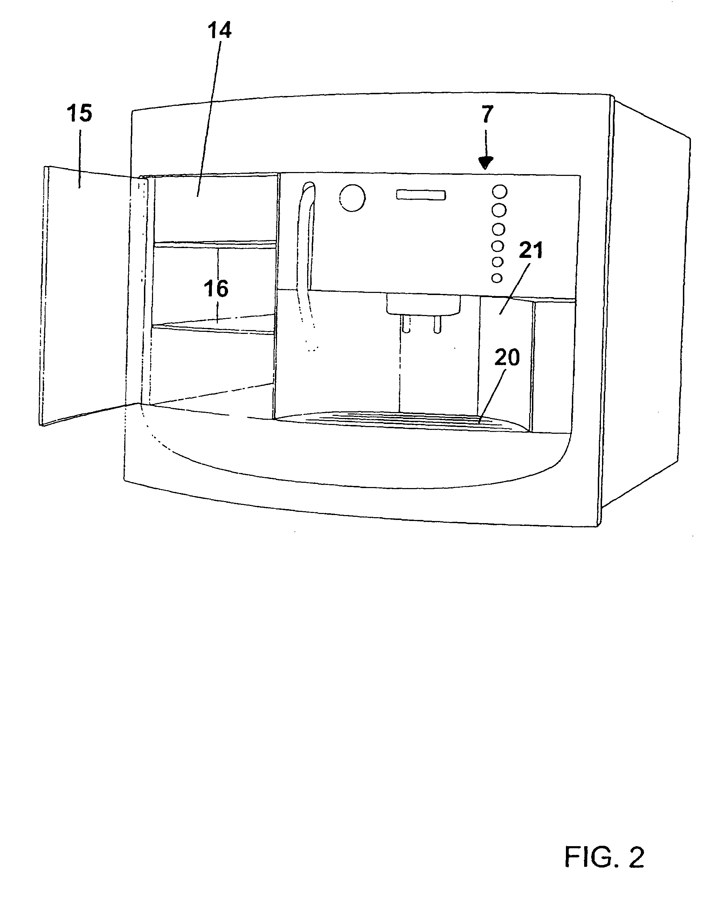

Wie aus der Fig. 2 ersichtlich ist, wird der Aufnahmebereich 8 durch ein Behältnis 14 gebildet, das auf der Vorderseite mit einer Tür 15 versehen ist, die im geschlossenen Zustand ebenfalls einen integrierenden Bestandteil der Front des Küchenmöbels 2 bildet. Der Aufnahmebereich 8 ist in vertikaler Richtung mit Unterteilungen 16 versehen und dient der Aufnahme von verschiedensten Utensilien. Im vorliegenden Fall ist er insbesondere zur Aufnahme von Kaffee- und Espressotassen ausgebildet. Bevorzugterweise ist der Aufnahmebereich 8 mit einer elektrischen Widerstandsheizung versehen, welche den Innenraum des Behältnisses 14 aufheizt, was sich insbesondere bei Espressotassen, wie bereits vorgängig erläutert, vorteilhaft auswirkt.

Es versteht sich, dass der Innenraum des Aufnahmebereichs 8 auch zur Aufnahme von anderen Gegenständen vorgesehen sein kann und nicht zur Aufnahme oder nur zur Aufnahme von Tassen oder Gläsern ausgebildet sein muss. Beispielsweise könnten andere Unterteilungen oder auch Fächer zur Aufnahme von Kaffeebohnen, Kaffeelöffeln, Zucker, Tee etc. vorgesehen werden.

Ausserdem könnte der Aufnahmebereich, je nach Art, Grösse und Ausbildung der Kaffeemaschine, auch über oder unter der Kaffeemaschine angeordnet werden.

Aus dieser Darstellung sind insbesondere die Bedienelemente, der in der Aussparung angeordnete Kaffeeausgabeteil 12 sowie ein Dampfauslass 13 der Kaffeemaschine 7 ersichtlich. Die Aussparung 11 wird auf der unteren Seite von einer Auffangschale 20 für Restwasser begrenzt, der von der Vorderseite her herausnehmbar ist. Auf der rechten Seite der Kaffeemaschine 7 ist ein schubladenförmig ausgebildeter Aufnahmebehälter 21 für ausgelaugte Kaffeekuchen angeordnet, welcher ebenfalls von der Vorderseite her zugänglich ist.

Nebst den hier dargestellten Bedien- und Ausgabeelementen, auf die im einzelnen nicht näher eingegangen wird, kann die Kaffeemaschine 7 natürlich noch mit zusätzlichen oder alternativen Bedien- und/oder Ausgabeelementen versehen werden. Beispielsweise könnte eine Aufschäumeinrichtung für Milch vorgesehen werden, mittels welcher beispielsweise Cappuccino zubereitet werden kann. In diesem Fall könnte es vorteilhaft sein, wenn der Aufnahmebereich derart ausgestaltet wird, dass darin ein Milchbehälter aufgenommen werden kann, welcher die zur Herstellung des Cappuccino's benötigte Milch enthält.

Die Kaffeemaschine selber ist vorzugsweise als kompakte Bau-Einheit ausgebildet, welche bei Bedarf schnell und einfach ersetzt werden kann. Sie kann dabei mittels weniger Schrauben am Auszug befestigt werden oder es kann ein Schnappmechanismus zum Fixieren der Kaffeemaschine vorgesehen werden. Im vorliegenden Beispiel ist die Kaffeemaschine mit einem herkömmlichen Frischwassertank versehen. Es versteht sich, dass anstelle oder auch zusätzlich eine Fluid-Kupplung vorgesehen werden kann, über welche die Kaffeemaschine direkt an einer Frischwasserleitung angeschlossen werden kann. Als Alternative zu dem gezeigten Kaffeebohnenbehälter, der erst nach dem Ausziehen der Kaffeemaschinenanordnung aufgefüllt werden kann, könnte eine von der Frontseite her zugängliche Öffnung bzw. ein von der Frontseite befüllbarer Behälter vorgesehen werden. Ebenso könnte natürlich eine Auffüllöffnung vorgesehen werden, über welche der Kaffeemaschine von der Frontseite her Frischwasser zugeführt werden kann.

Wie bereits erwähnt, kann der Aufnahmebereich jedoch auch zur Aufnahme von zumindest einem weiteren Getränkebereiter, beispielsweise einem Sodawasser-Bereiter ausgebildet sein.

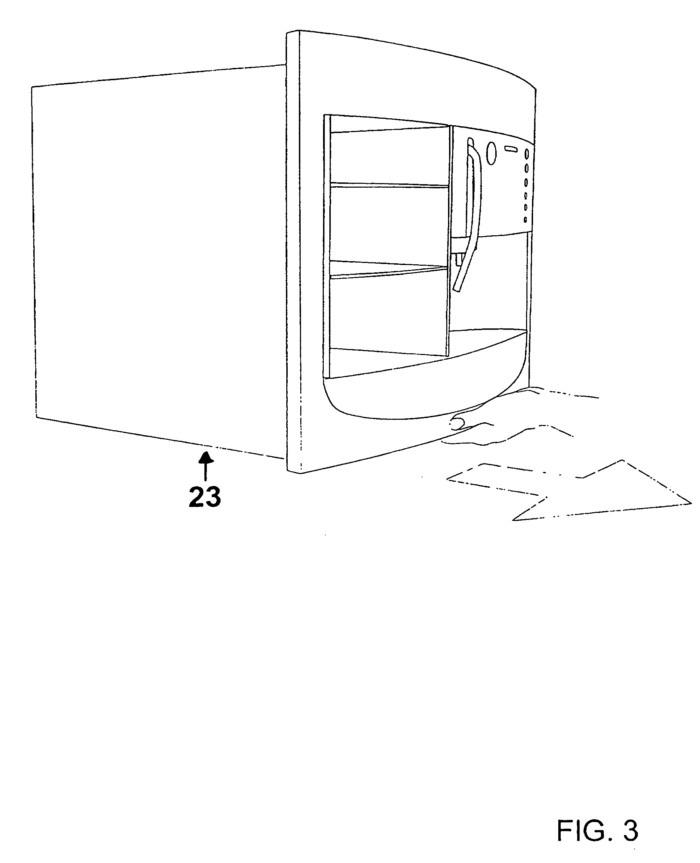

Aus der Fig. 3 ist ersichtlich, dass die Kaffeemaschinenanordnung auch in Form eines Auszugs ausgebildet bzw. auf einem Auszug angeordnet werden kann, so dass sie in Pfeilrichtung ausgezogen und in der Gegenrichtung wieder hineingeschoben werden kann. Da das grundsätzliche Prinzip von solchen Auszügen bekannt ist, braucht an dieser Stelle nicht näher darauf eingegangen zu werden. Allerdings kann der Auszug 23 mit mechanischen und/oder hydraulischen und/oder elektrischen Schnittstellenelementen versehen werden, welche ein schnelles, mechanisches Fixieren der Kaffeemaschine bzw. ein schnelles Anschliessen an das Spannungsnetz oder an eine Frischwasserleitung ermöglichen, wobei die Schnittstellenelemente nicht näher dargestellt sind.

## Patentansprüche

1. Küchenmöbel mit einer Kaffeemaschinenanordnung (6) zum Einbau in einen Küchenschrank, wobei die Kaffeemaschinenanordnung (6) eine Kaffeemaschine (7) mit einem mit Bedien- und Ausgabeelementen versehenen Frontbereich (10) aufweist, **dadurch gekennzeichnet, dass** das Küchenmöbel eine mit einer Ausnehmung (4) versehene Frontplatte (3) aufweist, dass sich der Frontbereich (10) der Kaffeemaschine (7) nur über einen Teil der Ausnehmung der Frontplatte erstreckt und einen integralen Bestandteil derselben bildet, und dass die Kaffeemaschinenanordnung (6) einen Aufnahmebereich (8) umfasst, welcher über den restlichen Teil der Ausnehmung der Aufnahmebereich (8) zugänglich ist.

2. Küchenmöbel nach Anspruch 1, **dadurch gekennzeichnet, dass** der Aufnahmebereich (8) zur Aufnahme von zumindest einem weiteren Getränkebereiter ausgebildet ist.

3. Küchenmöbel nach Anspruch 1, **dadurch gekennzeichnet, dass** der Aufnahmebereich (8) zumindest teilweise zur Aufnahme von Trinkgefässen, insbesondere zur Aufnahme von Tassen und Gläsern ausgebildet ist.

4. Küchenmöbel nach Anspruch 1 oder 3, **dadurch gekennzeichnet, dass** der Aufnahmebereich (8) seitlich von der Kaffeemaschine (7) angeordnet und in vertikaler Richtung mit Unterteilungen (16) versehen ist.

5. Küchenmöbel nach einem der vorhergehenden Ansprüche, **dadurch gekennzeichnet, dass** der Aufnahmebereich (8) zumindest teilweise geheizt und/oder gekühlt ist.

6. Küchenmöbel nach einem der vorhergehenden Ansprüche, **dadurch gekennzeichnet, dass** die Kaffeemaschine (7) als autonome Einheit ausgebildet ist.

7. Küchenmöbel nach einem der vorhergehenden Ansprüche, **dadurch gekennzeichnet, dass** die Kaffeemaschinenanordnung (6) auf einem Auszug (23) angeordnet ist.

8. Küchenmöbel nach einem der vorhergehenden Ansprüche, **dadurch gekennzeichnet, dass** der Aufnahmebereich (8) mit einer Tür (15) versehen ist, welche im geschlossenen Zustand einen integralen Bestandteil der Front (3) des Küchenmöbels (2) bildet.

9. Küchenmöbel nach einem der vorhergehenden Ansprüche, **dadurch gekennzeichnet, dass** der Frontbereich (10) der Kaffeemaschine (7) mit einer Auffangschale (20) für Restwasser und/oder mit einem Behälter (21) zur Aufnahme von ausgelaugtem Kaffeepulver versehen ist.

10. Küchenmöbel nach Anspruch 9, **dadurch gekennzeichnet, dass** die Auffangschale (20) für Restwasser und/oder der Behälter (21) zur Aufnahme von ausgelaugtem Kaffeepulver von der Frontseite her zugänglich sind.

11. Küchenmöbel nach einem der vorhergehenden Ansprüche, **dadurch gekennzeichnet, dass** eine von der Frontseite her zugängliche Öffnung zum Einfüllen von Kaffeebohnen vorgesehen ist.

12. Küchenmöbel nach einem der Ansprüche 7 bis 11, **dadurch gekennzeichnet, dass** der Auszug (23) mit mechanischen und/oder hydraulischen und/oder elektrischen Schnittstellenelementen zum Anschliessen der Kaffeemaschine (7) versehen ist.

13. Küchenmöbel nach einem der vorhergehenden Ansprüche, **dadurch gekennzeichnet, dass** die Kaffeemaschine (7) mit einer Kupplung für einen Frischwasseranschluss versehen ist.

## Claims

1. Piece of kitchen furniture with a coffee-machine arrangement (6) for installing in a kitchen cabinet, the coffee-machine arrangement (6) having a coffee machine (7) with a front region (10) provided with operating and dispensing elements, **characterized in that** the piece of kitchen furniture has a front panel (3) provided with a recess (4), **in that** the front region (10) of the coffee machine (7) extends only over part of the recess of the front panel and forms an integral constituent part of the same, and **in that** the coffee-machine arrangement (6) comprises an accommodating region (8), which is accessible via the rest of the recess.

2. Piece of kitchen furniture according to Claim 1, **characterized in that** the accommodating region (8) is designed for accommodating at least one further drinks maker.

3. Piece of kitchen furniture according to Claim 1, **characterized in that** the accommodating region (8) is designed, at least in part, for accommodating drinking vessels, in particular for accommodating cups and glasses.

4. Piece of kitchen furniture according to Claim 1 or 3, **characterized in that** the accommodating region (8) is arranged to the side of the coffee machine (7) and is provided with partitions (16) in the vertical direction.

5. Piece of kitchen furniture according to one of the preceding claims, **characterized in that** the accommodating region (8) is heated and/or cooled at least in part.

6. Piece of kitchen furniture according to one of the preceding claims, **characterized in that** the coffee machine (7) is designed as an autonomous unit.

7. Piece of kitchen furniture according to one of the preceding claims, **characterized in that** the coffee-machine arrangement (6) is arranged on a pull-out means (23).

8. Piece of kitchen furniture according to one of the preceding claims, **characterized in that** the accommodating region (8) is provided with a door (15) which, in the closed state, forms an integral constituent part of the front (3) of the piece of kitchen furniture (2).

9. Piece of kitchen furniture according to one of the preceding claims, **characterized in that** the front region (10) of the coffee machine (7) is provided with a collecting tray (20) for residual water and/or with a container (21) for receiving used-up coffee powder.

10. Piece of kitchen furniture according to Claim 9, **characterized in that** the collecting tray (20) for residual water and/or the container (21) for receiving used-up coffee powder are/is accessible from the front side.

11. Piece of kitchen furniture according to one of the preceding claims, **characterized in that** an opening which is accessible from the front side is provided for the introduction of coffee beans.

12. Piece of kitchen furniture according to one of Claims 7 to 11, **characterized in that** the pull-out means (23) is provided with mechanical and/or hydraulic and/or electrical interface elements for the connection of the coffee machine (7).

13. Piece of kitchen furniture according to one of the preceding claims, **characterized in that** the coffee machine (7) is provided with a coupling for a clean-water connection.

## Revendications

1. Meuble de cuisine avec un arrangement de cafetière électrique (6), pour incorporation dans un buffet de cuisine, l'arrangement de cafetière électrique (6) présentant une machine à café (7) avec une zone frontale (10), munie d'éléments de réglage et de sortie, **caractérisé en ce que** le meuble de cuisine présente une plaque frontale (3), munie d'un creux (4), que la zone frontale (10) de la machine à café (7) ne s'étend que sur une partie du creux de la plaque frontale et forme une composante intégrale de celle-ci et que l'arrangement de cafetière électrique (6) comprend une zone de logement (8), qui est accessible par l'intermédiaire de la partie restante du creux de la zone de logement (8).

2. Meuble de cuisine selon la revendication 1, **caractérisé en ce que** la zone de logement (8) est constituée pour loger au moins un autre préparateur de boissons.

3. Meuble de cuisine selon la revendication 1, **caractérisé en ce que** la zone de logement (8) est constituée au moins partiellement pour loger des récipients pour boire, en particulier pour loger des tasses et des verres.

4. Meuble de cuisine selon la revendication 1 ou 3, **caractérisé en ce que** la zone de logement (8) est disposée latéralement par rapport à la machine à café (7) et est munie, dans le sens vertical, de cloisonnements (16).

5. Meuble de cuisine selon l'une des revendications précédentes, **caractérisé en ce que** la zone de logement (8) est au moins partiellement chauffée et/ou refroidie.

6. Meuble de cuisine selon l'une des revendications précédentes, **caractérisé en ce que** la machine à café (7) est constituée en tant qu'unité autonome.

7. Meuble de cuisine selon l'une des revendications précédentes, **caractérisé en ce que** l'arrangement de cafetière électrique (6) est disposé sur une coulisse (23).

8. Meuble de cuisine selon l'une des revendications précédentes, **caractérisé en ce que** la zone de logement (8) est munie d'une porte (15), qui forme, à l'état fermé, une composante intégrale de l'avant (3) du meuble de cuisine (2).

9. Meuble de cuisine selon l'une des revendications précédentes, **caractérisé en ce que** la zone frontale (10) de la machine à café (7) est munie d'un bac collecteur (20) pour l'eau résiduelle et / ou d'un conteneur (21), pour loger le marc de café.

10. Meuble de cuisine selon la revendication 9, **caractérisé en ce que** le bac collecteur (20) pour l'eau résiduelle et / ou le conteneur (21), pour loger le marc de café, sont accessibles par le côté frontal.

11. Meuble de cuisine selon l'une des revendications précédentes, **caractérisé en ce qu'**une ouverture, accessible par le côté frontal, est prévue pour le remplissage de grains de café.

12. Meuble de cuisine selon l'une des revendications 7 à 11, **caractérisé en ce que** la coulisse (23) est munie d'éléments d'interface mécaniques et / ou hydrauliques et / ou électriques, pour le raccordement de la machine à café (7).

13. Meuble de cuisine selon l'une des revendications précédentes, **caractérisé en ce que** la machine à café (7) est munie d'un dispositif d'accouplement pour un raccordement en eau fraîche.
